# EUROPEAN PATENT APPLICATION

(11) **EP 0 838 761 A2**
(43) Date of publication of application: **29.04.1998**
(21) Application number: 97105958.9
(22) Date of filing: 10.04.1997
(51) Int. Cl.: G06F 11/32

(54) **Dynamic maps and server-based map editing**

(30) Priority: 23.10.1996 US 735465
(71) Applicant: Hewlett-Packard Company, Palo Alto, California 94304 (US)
(72) Inventor: Gase, Stephen T., Boise, Idaho 83709 (US); Stollfus, Brennen W., Boise, Idaho 83705 (US)
(74) Representative: Schoppe, Fritz, Dipl.-Ing.

(57) **Abstract**

A method of generating and editing a dynamic map (Fig. 1) includes retrieving, from a network storage device, a static map (Fig. 3) of at least one static resource (37,40,45,50), retrieving at least one indicia (55,60,65) representative of a dynamic resource (such as a printer device on a network) for association with the static map, determining a status of the dynamic resource, and merging the static map (Fig. 3), the at least one indicia (55,60,65), and the status (57,62) of the dynamic resource for generating the dynamic map. The dynamic resource indicia is displayed as a graphic icon (55,60,65), and the status of the dynamic resource is displayed as a distinguishing feature (57,62) relative to the graphic icon, such as a change in background color around the icon. The dynamic resource is polled upon displaying of the dynamic map for an accurate, live, representation of the status of the dynamic resource. Furthermore, the dynamic resource is polled intermittently to regenerate the dynamic map for up-to-date statusing of the dynamic resource. In a preferred embodiment, the elements defining the dynamic map are stored at a server computing device, the dynamic map is generated from the elements at the server computing device, and the dynamic map is remotely accessible through a conventional Internet connection and web browser.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### FIELD OF THE INVENTION

This invention relates in general to electronic mapping of objects and, more particularly, to dynamic mapping for rendering updated status information of mapped objects at a glance.

### BACKGROUND OF THE INVENTION

Printers, plotters and scanners are each a form of specialized computer and each has a unique configuration and installation need. When connected to a network, these devices often have additional configuration requirements. As such, to address the unique configuration needs, vendors have built proprietary solutions for administering their devices within any given networked environment. Specifically, vendors have been forced to construct specialized versions of their device management packages for the large existing matrix of platforms, based on various client and network operating system differences.

Conventional device management packages identify the networked devices being managed by means of a simple listing technique. Namely, the devices are display listed merely by name or some other identifier. Typically, no map reference for location identification is provided, nor is any live status information of the device provided at the initial listing level. Rather, such detail information is accessed only by selecting on a particular listed device, whereby the information is then presented. A good high level map actually showing device location and status information simply has not been available nor been feasible.

A new trend within the computing industry is to provide management for networked devices over the Internet or World Wide Web. Furthermore, the management is provided via a standard Web Browser. This is because a standard Web Browser has many benefits, including location flexibility, cross-platform support, and adoption of industry standards. However, high level mapping showing device location and status information still has not been available or feasible even using existing Web Browser capabilities.

HTML is an industry standard file format for Web pages. HTML specifies a syntax for viewing graphics and designating areas of a graphical image as "hot-spots" on Web pages. A hot spot provides a link to another Web page of information. By selecting on a hot spot (such as with a mouse or other pointing device), the user is able to move or "drill down" to the new Web page of information related to that hot spot. The use of hot-spots provides the drill down capability for accessing detail device information in conventional management packages that "list" the network devices.

In effort to improve over mere "lists" of information, literal mapping of resources has been implemented for rendering better relational information of general layouts of facilities, offices, organizations, equipment, computers, peripherals, networks, other objects and the like. For example, in the computer networking environment, where computing equipment and peripherals are networked together, it is not uncommon to map out the physical or logical layout of the network, equipment and peripherals, relative to each other and/or relative to the facilities layout in which the network is disposed. Such mapping provides a valuable resource for system administration purposes, for general use of the networked devices, and for device and facilities management in relation to the network.

However, in today's Web site and other network specific implementations, electronic maps are shown only as "static" images, albeit with some "hot spots" or "links" to other maps or Web pages. These maps are "static" from a high level perspective because they do not portray at-a-glance the up-to-date or "live" status information of any of the dynamic resources. Rather, these maps require further action on the part of the user in order to obtain detailed information relative to a particular resource located on the map. Namely, the user must select on a resource (i.e., a hot spot representative, for example, of a specific networked device) to drill-down to a specific page in order to get the necessary detail information about the selected device. For example, if an electronic map depicts an office layout and the physical or relative locations of networked printers (i.e., dynamic resources) in the office, the high-level map does not detail any specific printer status information without the user having to select that printer (its hot spot icon on the map) to request that information. Moreover, any physical or locational change of a resource (device) relative to these "static" maps requires that the map be edited offline using a dedicated mapping or graphics (drawing) program. This results, undesirably, in an expenditure of a significant amount of time and effort by an administrator, user, or other individual capable of effectuating the changes on the map.

Accordingly, an object of the present invention is to provide electronic dynamic mapping capabilities for relaying updated, at-a-glance status information of dynamic resources, and for providing easy editing capabilities of the resulting dynamic map in the event of a change in resource configurations.

### SUMMARY OF THE INVENTION

According to principles of the present invention in a preferred embodiment, a method of generating and editing a dynamic map includes retrieving, from a network storage device, a static map of at least one static resource, retrieving at least one indicia representative of a dynamic resource for association with the static map, determining a status of the dynamic resource, and merging the static map, the at least one indicia, and the status of the dynamic resource for generating the dynamic map. Also in a preferred embodiment, the dynamic map generated depicts locations and up-to-date statuses of computer networked devices in reference to an environment defined by generally fixed physical relationships, such as an office layout.

According to further principles, the dynamic resource indicia is displayed as a graphic icon, and the status of the dynamic resource is displayed as a distinguishing feature relative to the graphic icon, such as a change in background color around the icon. The dynamic resource is polled upon displaying of the dynamic map for an accurate, live, representation of the status of the dynamic resource. Furthermore, the dynamic resource is polled intermittently to regenerate the dynamic map for up-to-date statusing of the dynamic resource.

Also in a preferred embodiment, the elements defining the dynamic map are stored at a server computing device, the dynamic map is generated from the elements at the server computing device, and the dynamic map is remotely accessible through a conventional Internet connection and web browser.

Other objects, advantages, and capabilities of the present invention will become more apparent as the description proceeds.

### DESCRIPTION OF THE DRAWINGS

Figure 1 is a depiction of a dynamic map according to principles of the invention.

Figure 2 is a high level block diagram depicting the differing functions and features of the dynamic mapping utility of the present invention.

Figure 3 depicts the static mapfile used in the generation of the dynamic map of Figure 1.

Figure 4 depicts a grid overlaying the static mapfile of Figure 3, showing one tool for editing dynamic maps of the present invention.

Figure 5 depicts a display screen showing a control panel for editing the dynamic maps of the present invention.

Figure 6 shows how dynamic resources are placed onto the static map using the editing control of Figure 5.

Figure 7 is a flow diagram depicting a preferred method of the present invention for originally creating a dynamic map.

Figure 8 is a flow diagram depicting a preferred method for viewing a dynamic map.

### DETAILED DESCRIPTION OF THE INVENTION

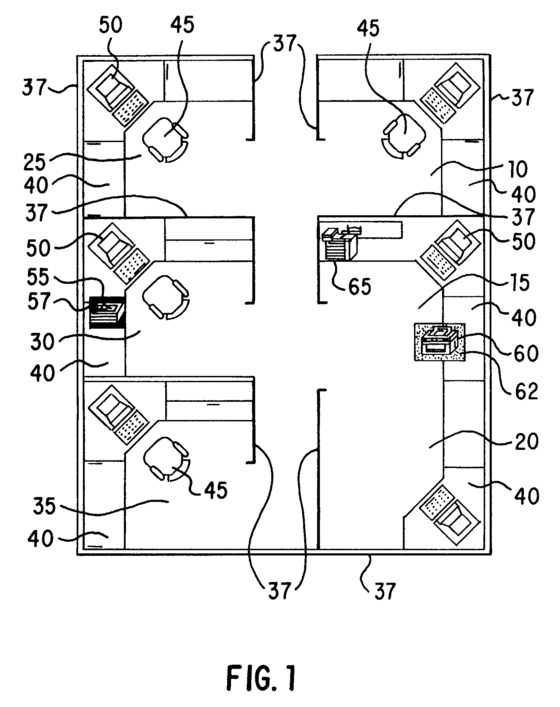

Figure 1 depicts a dynamic map according to principles of the present invention in a preferred embodiment. This dynamic map, and the dynamic mapping features of the present invention, provide "live" information at a single glance concerning dynamic resources. The map is displayed electronically on a conventional display device, such as a computer monitor. Moreover, in a preferred embodiment, the map is displayed using a conventional Web Browser, and the map is accessed from a Web server via the Internet. The reference implementation is based on software that executes within the Web server. Although the invention will be discussed herein in reference to dynamically mapping a network of computers and computer peripherals, especially printer devices, within the context of an office floor plan layout, it will be apparent that the present invention is equally applicable to other facilities, organizations, equipment, objects and the like.

To this regard, the dynamic map of Figure 1 depicts a floor plan layout of a conventional modular office area having six cubicles 10, 15, 20, 25, 30 and 35 for personnel use or placement of equipment. Each cubicle is formed from modular walls 37 and is equipped with office equipment, such as desk tops 40, chairs 45 and computers 50. These facilities represent the "static" facilities and layout of the map because they define physical relationships that are generally considered fixed relative to each other. Most resources, such as walls 37, desk tops 40 and chairs 45, are considered static because they are not capable of generating a status indicia indicative of a "state of operation". Although computers 50 are capable of generating a status indicia, they are considered static in this example for ease of discussion purposes.

Similar to the static objects, printers 55, 60 and 65 are also displayed on the map as graphic image indicia (or icons), but the printers represent dynamic devices (resources) on the map. The printers are dynamic devices because each is capable of generating a status signal for relaying information descriptive of its own respective state of operation. For example, the map shows printer device 55 having a visibly distinguishable background color 57 relative to the printer icon itself 55. Although the background color is black and rectangular shaped in this example, other shapes or colors are usable to enhance the distinction of the background from the printer device icon itself. In this embodiment, background 57 is the means used to communicate at-a-glance the status or state of operation of printer 55, and background 57 has been designated to indicate that printer 55 is in an error condition.

As another example of the dynamic aspect of the map, printer 60 is depicted having a stippled background 62, indicative of printer 60 being in an offline status mode. On the other hand, printer 65 is depicted having a transparent background (i.e., no background is visible), indicative of printer 65 being in an on-line status or state of operation and ready for printing use. Although in these examples the background of each dynamic device has been arbitrarily chosen to reflect the current status of the respective device, it will be obvious that other colors, variations or implementations would also work to communicate the state of operation of the device with respect to the icon itself. Furthermore, although the printers themselves are shown as the dynamic devices, other objects or components may also be dynamic and displayed accordingly. For example, device identification (ID) information is dynamic because the ID information is stored in a removable control card (circuit card) within the device itself. Moreover, as a result, the icon representing the device is also dynamic.

As to the generation of the dynamic map of Figure 1, each of the printers 55, 60 and 65 had previously emitted a status signal, indicative of the status of the respective printer, and the status signal was translated or merged with the respective printer indicia icon and with the office layout static map to produce the resultant dynamic map shown. An advantage of this dynamic map is that it provides to a user the ability to quickly observe the overall condition or status of all the networked devices. Specifically, for example, it can be seen at a quick glance which printer device is in an error state, which is off-line, and which is operational. In contrast, conventional management or mapping tools do not provide such up-to-date device status information at-a-glance. Rather, conventional tools require the user to select on a particular device in order to drill down and see further device specific status information.

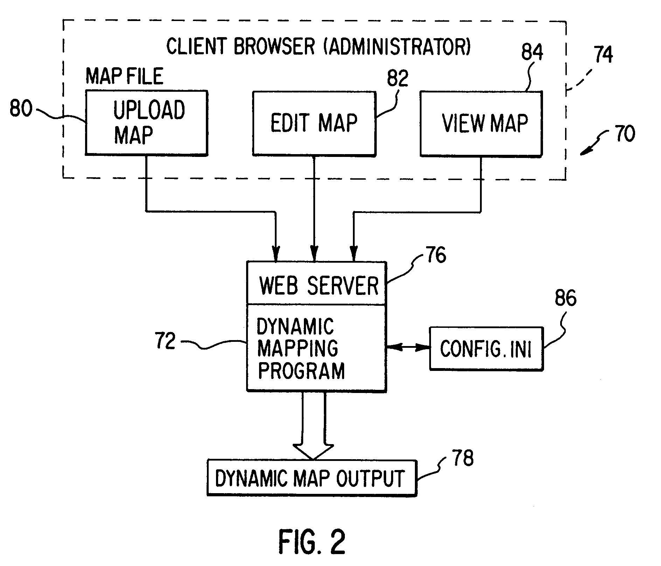

Figure 2 is a high level block diagram depicting the differing functions and features 70 of the dynamic mapping utility 72 of the present invention in relation to an implementation using a Web Browser 74 and Web Server 76 on the Internet for producing a dynamic map 78. Utility 72 is based on software that executes within Web Server 76. The general functions and features 70 provided by utility software 72 include creation and uploading capabilities (to Web Server 76) of a static mapfile 80, editing of the mapfile 82 for placement of devices and other objects, and viewing 84 of the resultant dynamic map. Config file 86 is exemplary of a file used for storing relevant device data on the server for use by the dynamic mapping program 72.

Again, Figure 2 depicts the invention implemented, in a preferred embodiment, using the Internet as the means for generating, displaying and editing dynamic maps. Although implementation in any specific operating system and environment is similarly applicable, the benefit of implementation in connection with using a Web Browser, HTML, and the Internet is that of cross-platform support, adoption of industry standards, location flexibility, etc.

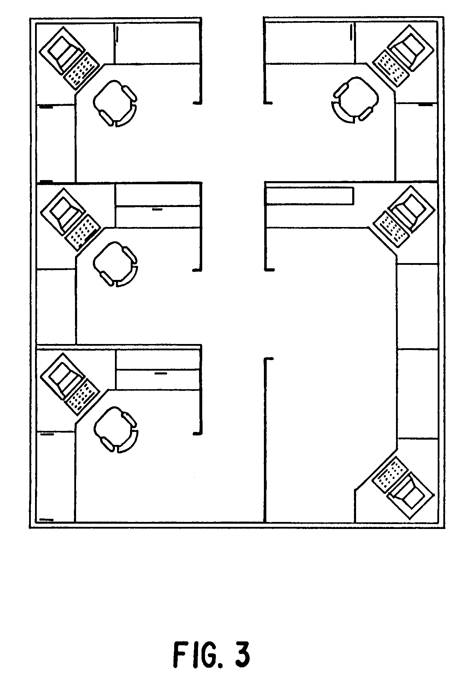

Each of the functions and features 70 of dynamic mapping utility 72 are described as follows. First, in order to initially establish the data necessary for implementation of a dynamic map, a user/administrator creates a static map or mapfile of a layout or area to be mapped. Any conventional external graphics utility (application program) serves to create the static mapfile. Figure 3 depicts the static mapfile used in Figure 1 showing the basic office layout. In this example, the walls, desk tops, chairs, and even computers (for ease of discussion purposes) are all part of the static mapfile. The printers, being the dynamic devices to be managed, are not part of the static mapfile originally created, and thus are not shown in Figure 3.

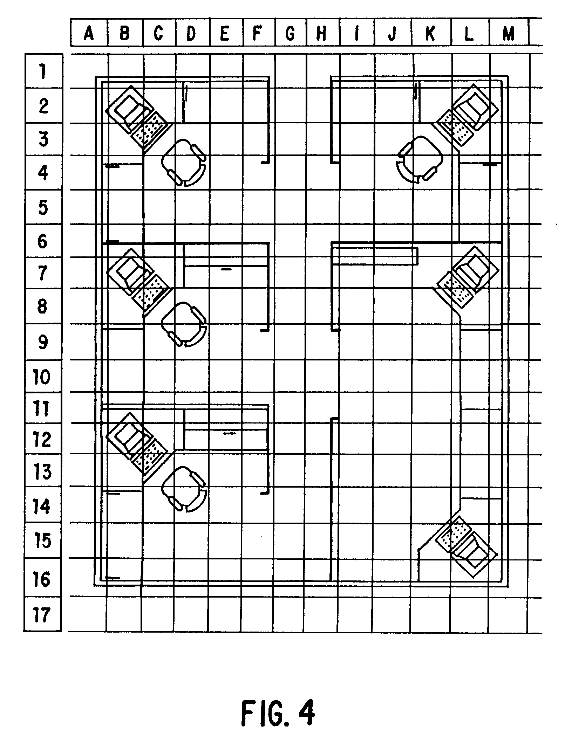

The mapfile is uploaded 80 (Figure 2) to the Web Server storage device 76 along with relevant information about the mapfile, such as what device group the mapfile is associated with. The information is stored in config file 86. Subsequently, the mapfile is read and the graphic bits are edited in order to overlay a grid pattern on the map. Figure 4 depicts a grid overlaying the static mapfile of Figure 3.

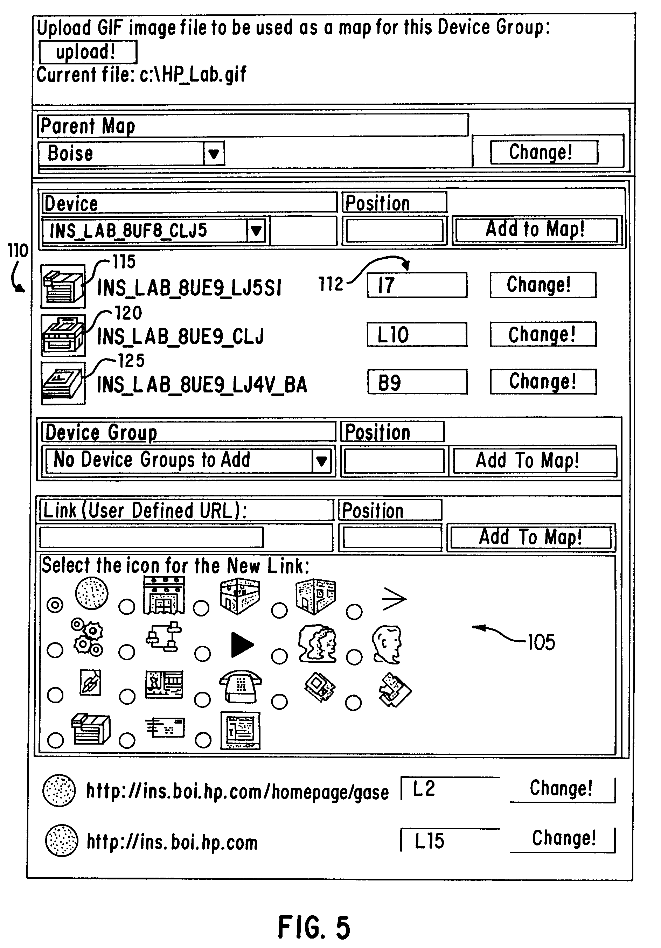

Next, the mapfile is edited 82 (Figure 2) to add, delete, or modify dynamic devices (objects) with respect to the mapfile. This is done by displaying a grid pattern over the mapfile, as well as displaying appropriate software selectable controls which provide the capability to add, delete or modify objects relative to the mapfile. Figure 5 depicts a preferred embodiment of the display screen controls for editing the mapfile.

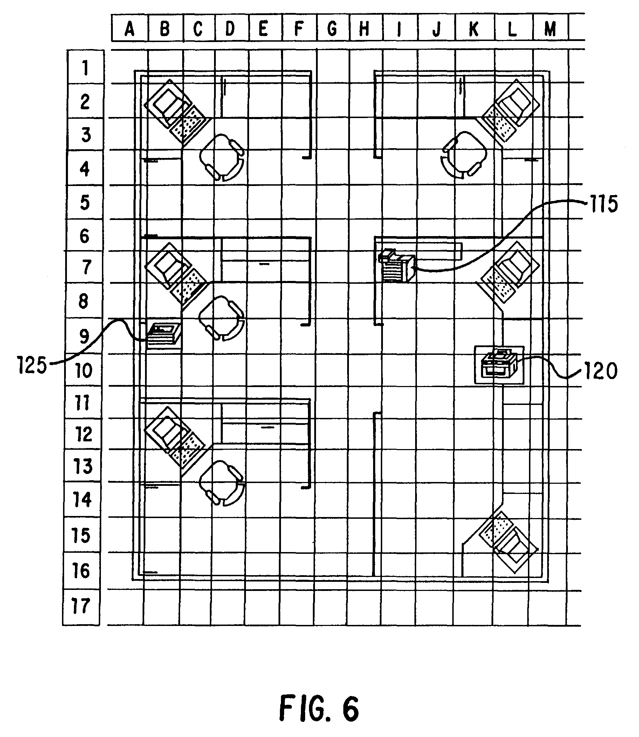

In reference to Figure 5, to add an object, for example, an appropriate icon is selected 105 for the desired device 110 to be added, and then position coordinates are entered 112 to define where the device should be placed on the static mapfile within the given grid pattern. In the example shown, the first printer device 115 is selected to be positioned on the mapfile at grid location I7, the second device 120 is to be positioned at grid location L10, and the third device 125 at location B9. Figure 6 shows the resultant map displayed after these devices are selected and placed on the mapfile at their appropriately designated locations.

As the devices are added, relevant device information, such as the coordinates entered, type of device, device name, etc., is stored in a standard configuration file (such as "config.ini" file 86). After an icon (gif file) is selected and associated with a device, program 72 then retrieves live status information about the device from across the network. As mentioned, the status information is indicative of the state of operation of the device. Then, in response to the status retrieved, the device icon is altered to reflect the "live" status (i.e., background color is changed), and the icon is merged into the mapfile for display. As a result, the dynamic map of Figure 1 is ultimately generated and displayed, wherein the status of each dynamic device is visible at-a-glance without having to drill down on that device.

The method of deleting and modifying devices relative to the mapfile, once a static mapfile and dynamic components are originally established, is similar to the method just described for adding dynamic devices. For example, to modify the location of a device, the device coordinates are edited to reflect where within the grid of the static map the device should be positioned. Or, to delete a device, the respective position coordinates are simply eliminated.

In the event a user intends simply to view 84 a dynamic map as generated from an existing mapfile, then similar steps are taken as already discussed. Namely, the specific mapfile is requested and loaded from server 76, object icons are retrieved and placed on the map in their previously designated locations (as specified in config file 86), status information is checked for the appropriate devices, icons are modified to reflect appropriate statuses, and then the icons are merged with the mapfile. Any designated hot spots are also determined and links are established. For example, each device on the map may be established as a hot spot with a link to a new page for viewing all the device specific data. Finally, once all the data is gathered and merged, the resulting dynamic file is generated for viewing 78, reflecting current statuses and locations of devices, groups, or other items or objects mapped by the user or administrator.

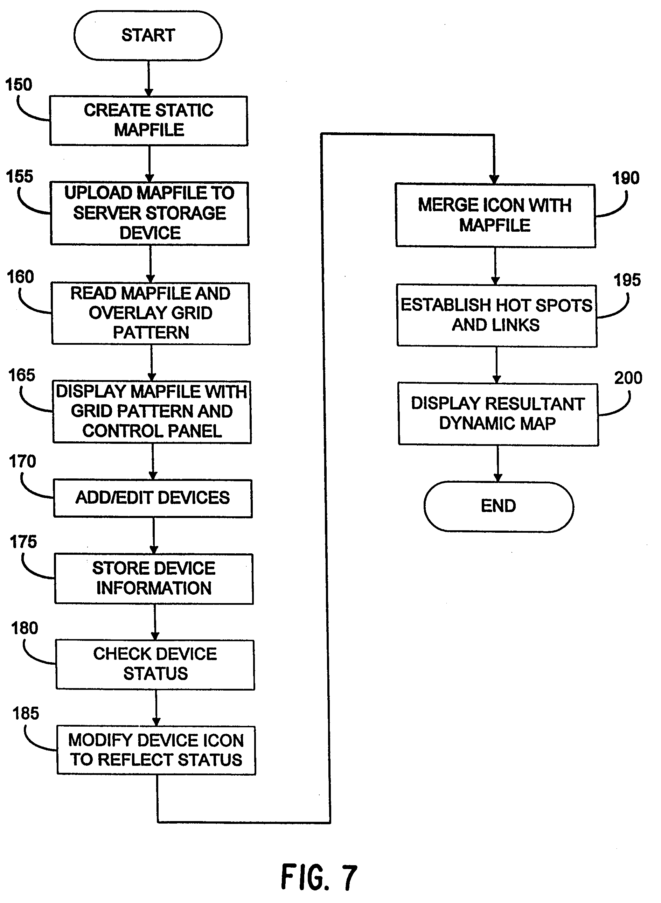

Referring now to Figure 7, a flow diagram depicts a preferred method of the present invention for originally creating the dynamic map of Figure 1. First, a "static" mapfile is created 150 of the floor plan, layout or other physical relationships generally considered fixed for static mapping purposes. As indicated, this is done with any conventional graphics application program outside of the present invention. Next, the static mapfile is uploaded 155 using a conventional Web Browser or the like to server storage device 76 by program 72 where the mapfile is read 160 and the graphic bits are edited in order to overlay a grid pattern on the mapfile. The mapfile and grid are then displayed 165 along with a control panel. The control panel provides the interface for adding or editing devices or other objects 170 in association with the mapfile at specified grid coordinates. The user thus enters coordinates for where the devices or objects are to be located on the map. For each device entered, that device's relevant information is stored to an appropriate config file 175. Finally, 180, each dynamic device entered is polled to determine its up-to-date status information, that information is reflected in the respective device icon 185, the icon is merged with the mapfile 190, hot spots and page links are established 195, and the resulting dynamic map is displayed 200 reflecting the latest "live" status information of the mapped devices.

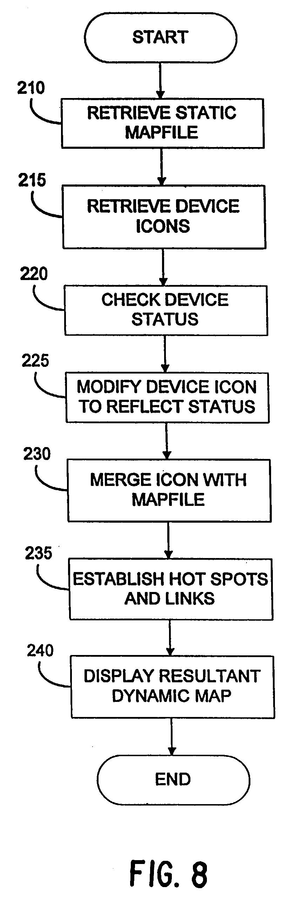

Referring now to Figure 8, a flow diagram depicts a preferred method for viewing a dynamic map of the present invention. First, 210, an existing static mapfile is retrieved from server storage device 76 by a user using a standard Web Browser or the like in connection with program 72. Next, object (device) icons that are associated with the selected mapfile are retrieved 215 by program 72 from the config file. Subsequently, status information is checked for the appropriate devices 220, the icons are modified 225 to reflect respective statuses, and then the icons are merged 230 with the mapfile. Any hot spots are then also determined and page links are established 235. Lastly, the resulting dynamic file is generated 240 for viewing, reflecting current statuses and locations of devices, groups, or other items or objects mapped by the user or administrator.

Finally, the present invention is implemented using software and hardware tools commonly available to, and usable by, those of ordinary skill in the art. For example, in a preferred embodiment, the software source code language used to implement dynamic mapping program 72 is "C" and "C + +". Furthermore, from a high level perspective, the dynamic mapping program is embodied in two functionally distinct modules (in a preferred embodiment). One module establishes the user interface for displaying and editing the dynamic maps in connection with a web browser and HTML pages. The other module operates as the network mechanism for talking to the printers on the network for determining the statuses. Moreover, as obvious to those of ordinary skill in the art, the device statuses are determined by broadcasting an inquiry over the network, or by polling each address in a given address range using a subnet mask to locate a device. Once the network address of the device is obtained, then communication with that device is accomplished using a conventional protocol, like Simple Network Management Protocol (SNMP). This communication provides the ability to determine the "live" status of each device. For example, in the network printer context, each printer can be checked for error conditions or the like as well known in the art.

In summary, what has been described above are the preferred embodiments for generating and editing a dynamic map for relaying up-to-date status information for dynamic devices on the map. While the present invention has been described by reference to specific embodiments, it will be apparent that other alternative embodiments and methods of implementation or modification may be employed without departing from the true spirit and scope of the invention.

## Claims

1. A method of generating a dynamic map, comprising:
(a) retrieving a static map (Fig. 3) from a storage device, wherein the static map defines at least one static resource (37,40,45,50);
(b) retrieving at least one indicia (55,60,65) representative of a dynamic resource for association with the static map;
(c) determining a status of the dynamic resource; and,
(d) merging the static map, the at least one indicia, and the status (57, 62) of the dynamic resource for generating the dynamic map (Fig. 1).

2. The method of claim 1 wherein the static resource (Fig. 3) is an environment defined by physical relationships generally considered fixed relative to each other.

3. The method of claim 1 wherein the storage device is associated with a computer network server.

4. The method of claim 1 wherein the static map (Fig. 3) is retrieved in electronic format capable of being graphically displayed.

5. The method of claim 1 wherein the at least one indicia is displayed as a graphic icon (105) or as a textual depiction.

6. The method of claim 5 wherein the status of the dynamic resource is indicative of a state of operation of the dynamic resource, and wherein the status is merged and displayed as a distinguishing feature (57,62) relative to the graphic icon or textual depiction of the at least one indicia (55,60,65).

7. The method of claim 1 wherein the dynamic resource (55,60,65) is an object capable of generating a status signal indicative of a state of operation.

8. The method of claim 1 further including the step of editing the dynamic map comprising:
(a) storing, modifying or deleting coordinates indicative of, respectively, to where a new dynamic resource is to be added, to where an existing dynamic resource is to be relocated, the deleting of an existing dynamic resource, each with respect to the dynamic map (Fig. 5); and,
(b) in the event of adding a new dynamic resource, then storing other relevant information about that dynamic resource to the storage device, including type of dynamic resource, for subsequent generation of the dynamic map.

9. A method for communicating dynamic resource data, comprising:
(a) determining a status (180) of at least one dynamic resource (55,60,65), the status indicative of a state of operation of the at least one dynamic resource;
(b) combining (190) the status with: (i) indicia indicative of the respective dynamic resource, and with (ii) a static map indicative of a static resource associated with the at least one dynamic resource, wherein the combining provides for generating a dynamic map; and,
(c) displaying on an electronic display device (200) the dynamic map wherein the status (57,62) is visually distinguishable from the indicia and static map for determining at-a-glance the state of operation of the at least one dynamic resource (55,60,65).

10. The method of claim 9 further including repeating steps (a), (b), and (c) for providing a regenerated dynamic map for rendering an updated state of operation of the at least one dynamic resource (55,60,65).
